# EUROPÄISCHE PATENTSCHRIFT

(11) **EP 0 642 859 B1**
(45) Veröffentlichungstag und Bekanntmachung des Hinweises auf die Patenterteilung: **30.07.1997**
(21) Anmeldenummer: 94202509.9
(22) Anmeldetag: 01.09.1994
(51) Int. Cl.: B23B 27/00, B23B 51/04

(54) **Schneidwerkzeug**
Cutting tool
Outil de coupe

(30) Priorität: 09.09.1993 AT 1817/93
(43) Veröffentlichungstag der Anmeldung: 15.03.1995
(73) Patentinhaber: PLANSEE TIZIT GESELLSCHAFT M.B.H., 6600 Reutte/Tirol (AT)
(72) Erfinder: Duwe, Jürgen, A-6611 Heiterwang (AT); Maier, Johann, A-6600 Pflach (AT); Rofner, Rudolf, A-6611 Heiterwang (AT)
(74) Vertreter: Lohnert, Wolfgang, Dr.

(56) Entgegenhaltungen:
- WO-A-91/18700
- DE-A- 2 733 705
- DE-U- 8 713 249
- US-A- 4 659 264
- US-A- 4 998 851

## Beschreibung

Die Erfindung betrifft ein Schneidwerkzeug zum Bohren ins Volle sowie zum Drehen, bestehend aus einem im wesentlichen zylindrischen Werkzeuggrundkörper mit einem Bearbeitungsabschnitt, mit einer in Längsrichtung verlaufenden Spannut mit einer Ausnehmung, in der eine prismatische, im wesentlichen rhombus- oder rhomboidförmige Wendeschneidplatte mit spitzen und stumpfen Eckenwinkeln von weniger als 89° bzw. mehr als 91° befestigt ist, wobei - in Draufsicht des Werkzeuges gesehen - zwei aktive Schneidkanten auf der Oberseite der Wendeschneidplatte liegen und die aktive stirnseitige Schneidkante etwa senkrecht zur Bohrlängsachse des Werkzeuges verläuft und ein Ende dieser Schneidkante den Bohrungsdurchmesser bestimmt, während das andere Schneidkantenende über die Bohrlängsachse hinausreicht und wobei diese Schneidkante gegenüber der Auflagefläche derartig geradlinig oder kurvenförmig geneigt ist, daß die Dicke der Wendeschneidplatte an der Schneidecke mit spitzem Winkel größer ist als an der Schneidecke mit stumpfem Winkel.

Derartige Werkzeuge sind universell einsetzbar und sowohl zum Bohren als auch zum Drehen geeignet. Sie kommen in der Regel auf Drehmaschinen zum Einsatz, wo zusätzlich zu einer Bohrbearbeitung des Werkstückes ohne Werkzeugwechsel auch noch Drehbearbeitungen wie Längsdrehen, Plandrehen oder Kopierdrehen durchgeführt werden können.

Die DE-OS 27 33 705 beschreibt ein derartiges Schneidwerkzeug. Bei diesem Schneidwerkzeug weist die Wendeschneidplatte jeweils zwei auf der Ober- und Unterseite liegende Schneidkanten auf. Dabei ist klarzustellen, daß gemäß Wortlaut der DE-A-2733705, und im Unterschied zur vorliegenden Erfindung, jeweils nur von einer Schneidkante (21 bzw. 21+21b), sowohl auf der Oberwie auf der Unterseite des Schneideinsatzes gesprochen wird, obwohl jeweils eine der beiden, an die Schneidkante 21 - auf der Ober- bzw. Unterseite - angrenzenden Kanten eine Schneidfunktion übernimmt, wie in Figur 4 unmißverständlich dargestellt ist. Jeweils eine dieser Schneidkanten verläuft etwa senkrecht zur Bohrlängsachse des Werkzeuges und ist darüberhinaus zur zugehörigen Auflagefläche der Wendeschneidplatte geneigt angeordnet und mit einer abgeschrägten Spanfläche versehen. Aufgrund dieser Ausgestaltung muß die Wendeschneidplatte beim Schneidkantenwechsel umgedreht werden und die zur Auflage der Wendeschneidplatte zur Verfügung stehende ebene Fläche ist verringert, was die Stabilität des Schneidwerkzeuges vermindert.

Zudem weist die etwa senkrecht zur Bohrlängsachse des Werkzeuges angeordnete stirnseitige Schneidkante eine Abweichung von 1° bis 5° von der Senkrechten auf und ist die in radialer Richtung über die Bohrlängsachse des Werkzeuges hinausreichende, stumpfwinkelige Schneidecke durch einen kurzen geraden Schneidkantenabschnitt abgeschrägt, sodaß die Schneidkante den im Zentrum unmittelbar an der Bohrlängsachse liegenden Bereich nicht schneidet. Auf diese Weise wird bei der Herstellung einer Bohrung mit diesem Werkzeug kein ebener Bohrungsgrund, sondern ein zum Zentrum ansteigender Bohrungsgrund mit einem Zapfen in der Mitte ausgebildet, was für viele Anwendungen von Nachteil ist.

Die EP 0 502 541 beschreibt eine prismatische, im wesentlichen rhomboidförmige Wendeschneidplatte, bei der alle vier Schneidkanten auf der Oberseite der Wendeschneidplatte liegen. Die Schneidkanten sind über ihre gesamte Länge gegenüber der Auflagefläche so geneigt, daß die Dicke der Wendeschneidplatte an den Schneidecken mit einem spitzen Winkel größer ist als an den Schneidecken mit einem stumpfen Winkel. Zudem sind alle vier Schneidecken abgerundet. Bei einem Einsatzbeispiel dieser Wendeschneidplatte in einem Werkzeug ist diese in der Ausnehmung eines zylindrischen Werkzeugabschnittes so angeordnet, daß eine Schneidkante etwa senkrecht zur Längsachse des Werkzeuges verläuft und die zugehörige spitzwinkelige Schneidecke den Außendurchmesser des Werkzeuges bestimmt, während die zugehörige stumpfwinkelige Schneidecke über die Längsachse des Werkzeuges hinausreicht. Der Bereich der über die Längsachse des Werkzeuges reicht ist im Vergleich zur gesamten Schneidkantenlänge sehr groß. Zudem ist diese Schneidkante so angeordnet, daß sie - in Stirnansicht des Werkzeuges gesehen - von der Längsachse des Werkzeuges einen bedeutenden Abstand aufweist. Durch diese Anordnung der Wendeschneidplatte ist das Werkzeug nur für den rotierenden Einsatz als Fräser geeignet. Ein Einsatz als Werkzeug zum Bohren ins Volle wäre nicht möglich, da dabei der über die Längsachse des Werkzeuges hinausstehende Schneidkantenabschnitt abgedrückt werden würde.

Die GB-A 2 010 707 beschreibt ein Bohrwerkzeug mit einer austauschbaren Wendeschneidplatte, das ebenfalls zum Bohren und zum Drehen geeignet ist. Durch die spezielle Ausgestaltung der Wendeschneidplatte mit einer Kerbe zur Spanunterbrechung und die Anordnung der Wendeschneidplatte am Werkzeuggrundkörper wird kein ebener Bohrungsgrund erreicht. Darüberhinaus ist die über der Mitte der Werkzeugachse schneidende Schneidecke der Wendeschneidplatte stark bruchgefährdet.

Die DE-A1 38 03 188 beschreibt einen Bohrnutenfräser mit einer auswechselbaren Wendeschneidplatte, bei dem die radial außen liegende aktive Schneidkante im wesentlichen parallel zur Drehachse des Fräsergrundkörpers verläuft. Damit ist dieses Werkzeug ausschließlich zum Fräsen geeignet und kann für Drehoperationen nicht verwendet werden.

Die Aufgabe der vorliegenden Erfindung ist es daher ein Werkzeug zum Bohren ins Volle und Drehen zu schaffen, mit dem Bohrungen mit ebenem Bohrungsgrund hergestellt werden können und das gegenüber bekannten derartigen Werkzeuge eine verbesserte Stabilität aufweist.

Erfindungsgemäß wird dies dadurch erreicht, daß vier Schneidkanten auf der Oberseite der Wendeschneidplatte liegen und an der Schneidecke abgerundet sind; daß die etwa senkrecht zur Bohrlängsachse verlaufende stirnseitige Schneidkante eine Abweichung von maximal 0,5° von der Senkrechten aufweist; daß das über die Bohrlängsachse hinausreichende Ende der stirnseitigen Schneidkante am Übergangspunkt vom geraden Schneidkantenabschnitt zum abgerundeten Eckenabschnitt - in Draufsicht des Werkzeuges gesehen - mit der Bohrlängsachse zusammenfällt, oder über diese mit einer Länge von maximal 10 % der Gesamtlänge der Schneidkante hinausreicht und daß die stirnseitige Schneidkante - in Stirnansicht des Werkzeuges gesehen - die Bohrlängsachse schneidet oder von dieser einen maximalen Abstand von 2 % des Bohrdurchmessers des Werkzeuges aufweist.

Das erfindungsgemäße Schneidwerkzeug ist sowohl zum feststehenden als auch zum rotierenden Einsatz geeignet und weist durch die Verwendung einer Wendeschneidplatte mit vollständig ebener Auflagefläche eine ausgezeichnete Stabilität auf. Die Wendeschneidplatte weist in der Regel eine positive Schneidgeometrie, vorteilhafterweise mit einem Freiwinkel von 7° auf, der eine gute Positionierung der Wendeschneidplatte ermöglicht. Durch die erfindungsgemäß geneigten Schneidkanten werden die für eine gute Zerspanung notwendigen Anstellwinkel in die Wendeschneidplatte verlagert, wodurch der die Wendeschneidplatte unterstützende Querschnitt des Werkzeugschaftes vergrößert werden kann, sodaß die Stabilität des Schneidwerkzeuges insbesondere bei kleinen Bohrungsdurchmessern wesentlich verbessert ist. Werkzeuge mit Bohrungsdurchmesser bis zu 8 mm und darunter können mit ausreichender Stabilität gefertigt werden. Die Aufnahme für die Wendeschneidplatte ist in der Regel so ausgelegt, daß die stirnseitige Schneidkante genau senkrecht zur Bohrachse des Werkzeuges angeordnet ist, durch herstellungsbedingte Toleranzen der Aufnahme und der Wendeschneidplatte können sich jedoch geringfügige Abweichungen bis max. 0,5° von der Senkrechten ergeben. Auf diese Art und Weise wird bei der Herstellung der Sackbohrungen ein ebener Bohrungsgrund erzielt. Durch die geringfügige Freistellung der seitlichen, die Bohrungswandung schneidende Schneidkante können mit dieser Schneidkante ebenfalls Drehoperationen wie Längs-, Plan- oder Kopierdrehen durchgeführt werden.

Vorzugsweise betragen die Eckenwinkel der Wendeschneidplatte 88° bzw. 92°, sodaß eine minimale Freistellung von 1,5° der seitlichen, die Bohrungswandung schneidenden Schneidkante erreicht wird.

In einer weiteren vorteilhaften Ausgestaltung des erfindungsgemäßen Schneidwerkzeuges verlaufen die Schneidkanten geradlinig geneigt unter einem Winkel von 3° - 10° zur Auflagefläche. Bei diesen Neigungswinkeln der Schneidkante wird erreicht, daß auch bei positiven Wendeschneidplatten mit 7° Freiwinkel die Schneidkanten beim Schneiden genügend freigehen.

Weiters ist es von Vorteil, die Wendeschneidplatte als Mittelloch-Wendeschneidplatte auszuführen und diese über das Mittelloch mit einer Senkkopfschraube am Werkzeuggrundkörper zu befestigen. Diese Befestigungsart ist einfach und sicher und auch noch bei kleinsten Bohrungsdurchmessern ausreichend stabil.

Da das erfindungsgemäße Schneidwerkzeug vorwiegend zum Bohren eingesetzt wird, ist bei der Zerspanung die Zuführung eines Kühlmittels wichtig, das die Schneidkanten kühlt und gleichzeitig die Späne aus der Bohrung spült. Zweckmäßigerweise ist dazu eine Längsbohrung im Werkzeugschaft vorgesehen, die unmittelbar an der Wendeschneidplatte mündet.

Im folgenden wird die Erfindung anhand von Figuren näher erläutert.
Es zeigen:
- Fig. 1:: ein erfindungsgemäßes Schneidwerkzeug in Draufsicht
- Fig. 2:: das erfindungsgemäße Schneidwerkzeug nach Fig.1 in Seitenansicht
- Fig. 3:: das erfindungsgemäße Schneidwerkzeug nach Fig.1 in Stirnansicht
- Fig. 4:: eine Wendeschneidplatte für ein erfindungsgemäßes Werkzeug mit spezieller Spanleitstufengestaltung im Schrägriß

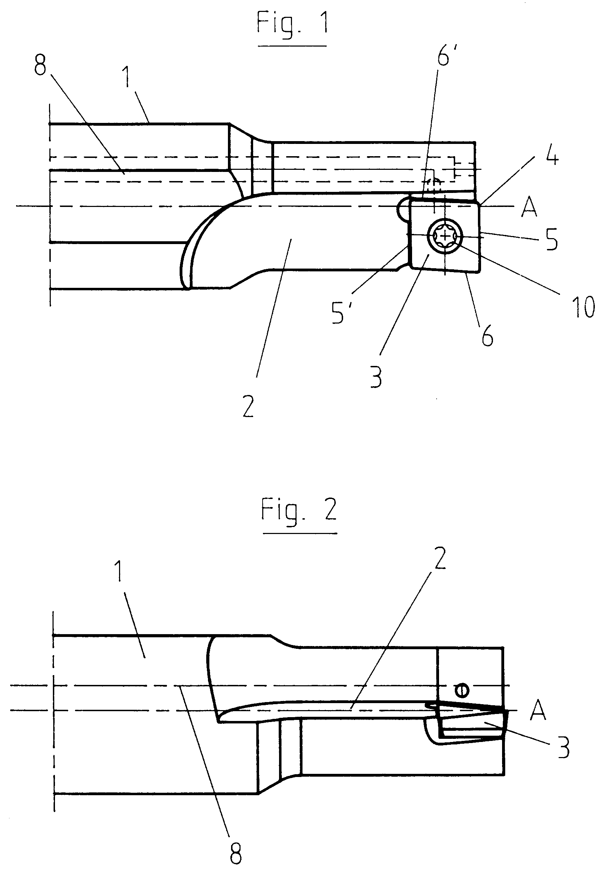

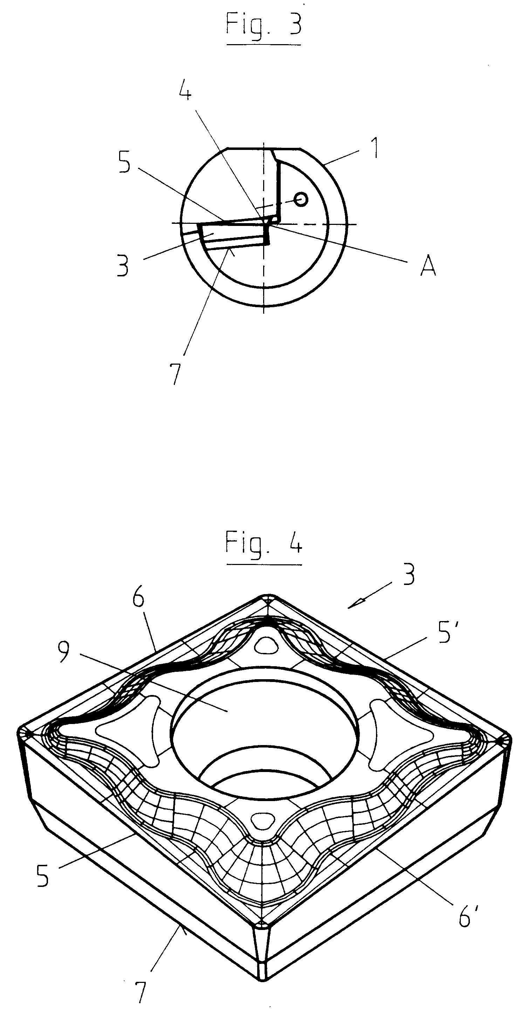

Das erfindungsgemäße Schneidwerkzeug, entsprechend der Figuren 1 bis 3 weist einen zylindrischen Werkzeugschaft -1- auf. An einem Ende weist der Werkzeugschaft -1- einen Bearbeitungsabschnitt mit etwas geringerem Durchmesser und mit einer in Längsrichtung verlaufenden Spannut -2- zur Abfuhr der Späne auf. In einer Ausnehmung dieser Spannut -2- ist eine prismatische, etwa rhombusförmige Wendeschneidplatte -3- mit einem Mittelloch mit Hilfe einer Senkkopfschraube -10- am Werkzeuggrundkörper befestigt. Die Wendeschneidplatte -3- weist Eckenwinkel von 88° und 92° mit abgerundeten Schneidecken auf und ist derart angeordnet, daß die aktive stirnseitige Schneidkante -5- in Fig. 1 gesehen zur Bohrlängsachse -A- des Schneidwerkzeuges senkrecht steht. Die zugehörige stumpfwinkelige Schneidecke mit 92° Eckenwinkel schneidet in radialer Richtung geringfügig über die Bohrlängsachse -A- hinaus und zwar so, daß der Übergangspunkt -4- vom geraden Schneidkantenabschnitt zum abgerundeten Eckenabschnitt mit der Bohrungslängsachse -A- zusammenfällt. Die zugehörige spitzwinkelige Schneidachse mit 88° bestimmt den Außendurchmesser des Schneidwerkzeuges. Sowohl die aktiven Schneidkanten -5- und -6- als auch die inaktiven Schneidkanten -5'- und -6'- liegen auf der Oberseite der Wendeschneidplatte -3-, sodaß ein Schneidkantenwechsel durch Lösen der Befestigungsschraube -10- und Drehen der Wendeschneidplatte -3- erreicht wird. Sämtliche Schneidkanten -5-, -6-, -5'- und -6'- sind gegenüber der Auflagefläche -7-der Wendeschneidplatte -3- derart geradlinig geneigt, daß die Dicke der Wendeschneidplatte -3- an den Schneidecken mit spitzem Winkel größer ist als an den Schneidecken mit stumpfen Winkeln. Das Schneidwerkzeug weist eine parallel zur Bohrlängsachse -A- verlaufende Bohrung -8- zur Kühlmittelzufuhr auf. Die Bohrung -8- mündet in eine Querbohrung die unmittelbar über der Wendeschneidplatte -2- aus dem Werkzeuggrundkörper austritt.

In Figur 4 ist eine Variante einor Wendeschneidplatte zur Verwendung in einem erfindungsgemäßen Schneidwerkzeug dargestellt. Die Spanfläche dieser Wendeschneidplatte weist eine spezielle Spanleitstufenkonfiguration auf, die eine sichere Spanumlenkung und rechtzeitigen Spanbruch bewirkt. Der unmittelbar an die Spanfläche angrenzende Bereich der Freiflächen weist einen Freiwinkel von 7° auf, während der an die Auflagefläche der Wendeschneidplatte angrenzende Bereich der Freiflächen einen Freiwinkel von 15° aufweist. Auf diese Weise ist auch noch bei Wendeschneidplatten mit größeren Plattenstärken gewährleistet, daß der bei der Zerspanung notwendige Freiwinkel eingehalten wird, ohne daß der Keilwinkel der Schneidkanten verkleinert wird.

## Patentansprüche

1. Schneidwerkzeug zum Bohren ins Volle sowie zum Drehen, bestehend aus einem im wesentlichen zylindrischen Werkzeuggrundkörper (1) mit einem Bearbeitungsabschnitt mit einer in Längsrichtung verlaufenden Spannut (2) mit einer Ausnehmung, in der eine prismatische, im wesentlichen rhombus- oder rhomboidförmige Wendeschneidplatte (3) mit spitzen und stumpfen Eckenwinkeln von weniger als 89° bzw. mehr als 91° befestigt ist, wobei - in Draufsicht des Werkzeuges gesehen - die aktive Schneidkanten (5, 6) auf der Oberseite der Wendeschneidplatte (3) liegen und die aktive stirnseitige Schneidkante (5) etwa senkrecht zur Bohrlängsachse (A) des Werkzeuges verläuft und ein Ende dieser Schneidkante (5) den Bohrungsdurchmesser bestimmt, während das andere Schneidkantenende über die Bohrlängsachse (A) hinausreicht und wobei diese Schneidkante (5) gegenüber der Auflagefläche (7) derartig geradlinig oder kurvenförmig geneigt ist, daß die Dicke der Wendeschneidplatte (3) an der Schneidecke mit spitzem Winkel größer ist als an der Schneidecke mit stumpfem Winkel,
**dadurch gekennzeichnet**,
daß vier Schneidkanten (5, 6; 5', 6') auf der Oberseite der Wendeschneidplatte (3) liegen und an den Schneidecken abgerundet sind; daß die etwa senkrecht zur Bohrlängsachse (A) verlaufende stirnseitige Schneidkante (5) eine Abweichung von maximal 0,5° von der Senkrechten aufweist; daß das über die Bohrlängsachse (A) hinausreichende Ende der stirnseitigen Schneidkante (5) am Übergangspunkt (4) vom geraden Schneidkantenabschnitt zum abgerundeten Eckenabschnitt - in Draufsicht des Werkzeuges gesehen - mit der Bohrlängsachse (A) zusammenfällt, oder über diese mit einer Länge von maximal 10 % der Gesamtlänge der Schneidkante (5) hinausreicht und daß die stirnseitige Schneidkante (5) - in Stirnansicht des Werkzeuges gesehen - die Bohrlängsachse (A) schneidet oder von dieser einen maximalen Abstand von 2 % des Bohrdurchmessers des Werkzeuges aufweist.

2. Schneidwerkzeug zum Bohren ins Volle und Drehen nach Anspruch 1, dadurch gekennzeichnet, daß die Eckenwinkel der Wendeschneidplatte (3) 88° bzw. 92° betragen.

3. Schneidwerkzeug zum Bohren ins Volle und Drehen nach Anspruch 1 bis 2, dadurch gekennzeichnet, daß die Schneidkanten (5, 6; 5', 6') geradlinig geneigt unter einem Winkel von 3° bis 10° zur Auflagefläche verlaufen.

4. Schneidwerkzeug zum Bohren ins Volle und Drehen nach einem der Ansprüche 1 bis 3, dadurch gekennzeichnet, daß die Wendeschneidplatte (3) ein Mittelloch (9) aufweist und über dieses Mittelloch (9) mit Hilfe einer Senkkopfschraube (10) am Werkzeuggrundkörper befestigt ist.

5. Schneidwerkzeug zum Bohren ins Volle und Drehen nach einem der Ansprüche 1 bis 4, dadurch gekennzeichnet, daß das Werkzeug (1) eine unmittelbar an die Wendeschneidplatte (3) mündende in Längsrichtung des Werkzeugschaftes (1) verlaufende Bohrung (8), zur Zufuhr von Kühlmittel, aufweist.

## Claims

1. A cutting tool for drilling into solid material and for turning, comprising a substantially cylindrical tool base element (1) with a machining section with a chip groove (2), which extends in the longitudinal direction and comprises a recess, in which a prismatic, substantially rhombus or rhomboid-shaped reversible bit (3) with acute and obtuse corner angles of less than 89° or more than 91° is secured, the active cutting edges (5, 6) lying on the upper side of the reversible bit (3) - in the top view of the tool - and the active end-face cutting edge (5) extending approximately perpendicular to the bore longitudinal axis (A) of the tool and one end of said cutting edge (5) defining the bore diameter, whilst the other cutting edge end extends beyond the bore longitudinal axis (A) and this cutting edge (5) being inclined linearly or in an arc relative to the bearing surface (7) in such a manner that the thickness of the reversible bit (3) is greater at the acute-angled cutting corner than at the obtuse-angled cutting corner,
characterised in that four cutting edges (5, 6; 5', 6') lie on the upper side of the reversible bit (3) and are rounded at the cutting corners; the end-face cutting edge (5) extending approximately perpendicular to the bore longitudinal axis (A) deviates from the perpendicular by a maximum of 0.5°; the end of the end-face cutting edge (5) extending beyond the bore longitudinal axis (A) coincides with the bore longitudinal axis (A) at the transition point (4) from the straight cutting edge section to the rounded corner section - in the top view of the tool -, or extends beyond said bore longitudinal axis (A) with a length of 10% maximum of the over length of the cutting edge (5), and the end-face cutting edge (5) - in the front view of the tool - intersects the bore longitudinal axis (A) or lies at a distance from said axis of 2% maximum of the boring diameter of the tool.

2. A cutting tool for drilling into solid material and turning according to claim 1, characterised in that the corner angles of the reversible bit (3) measure 88° or 92°.

3. A cutting tool for drilling into solid material and turning according to claims 1 to 2, characterised in that the cutting edges (5, 6; 5', 6') extend linearly inclined relative to the bearing surface at an angle of 3° to 10°.

4. A cutting tool for drilling into solid material and turning according to one of claims 1 to 3, characterised in that the reversible bit (3) comprises a central aperture (9) and is secured via said central aperture (9) to the tool base element with the aid of a countersunk screw (10).

5. A cutting tool for drilling into solid material and turning according to one of claims 1 to 4, characterised in that the tool (1) comprises a bore (8) for the supply of cooling means, which bore opens directly onto the reversible bit (3) and extends in the longitudinal direction of the reversible bit (3).

## Revendications

1. Outil de coupe pour alésage dans la masse et tournage, se composant d'un corps de base (1) d'outil sensiblement cylindrique à partie d'usinage comportant une goujure (2), qui s'étend dans la direction longitudinale et dans laquelle est ménagé un évidement où est fixée une plaquette réversible prismatique (3) sensiblement en forme de losange ou rhomboïde à angles de coins aigus et obtus de moins de 89° ou de plus de 91°, outil dans lequel - en vue de dessus de l'outil - les arêtes actives de coupe (5, 6) sont situées sur le côté supérieur de la plaquette réversible (3) et le tracé de l'arête frontale de coupe active (5) est à peu près perpendiculaire à l'axe longitudinal d'alésage (A) de l'outil et une extrémité de cette arête de coupe (5) définit le diamètre d'alésage, tandis que l'autre extrémité de l'arête de coupe est située au-delà de l'axe longitudinal d'alésage (A), et dans lequel cette arête de coupe (5) est inclinée de façon rectiligne ou curviligne par rapport à la surface d'appui (7) d'une manière telle que l'épaisseur de la plaquette réversible (3) est plus forte au coin de coupe à angle aigu qu'au coin de coupe à angle obtus,
caractérisé
en ce que quatre arêtes de coupe (5, 6; 5', 6') sont situées sur le côté supérieur de la plaquette réversible (3) et sont arrondies aux coins de coupe;
en ce que l'arête frontale de coupe (5) de tracé à peu près perpendiculaire à l'axe longitudinal d'alésage (A) s'écarte au maximum de 0,5° de la perpendiculaire;
en ce que l'extrémité, située au-delà de l'axe longitudinal d'alésage (A), de l'arête frontale de coupe (5) coïncide - en vue de dessus de l'outil - avec l'axe longitudinal d'alésage (A) au point de raccordement (4) entre la partie rectiligne d'arête de coupe et la partie arrondie de coin, ou qu'elle est située au delà de cet axe à une distance maximale égale à 10% de la longueur totale de l'arête de coupe (5) et
en ce que l'arête frontale de coupe (5) coupe - en vue de face de l'outil - l'axe longitudinal d'alésage (A) ou en est éloignée d'une distance maximale de 2% du diamètre d'alésage de l'outil.

2. Outil de coupe pour alésage dans la masse et tournage selon la revendication 1, caractérisé en ce que les angles de coins de la plaquette réversible (3) sont de 88° à 92°.

3. Outil de coupe pour alésage dans la masse et tournage selon la revendication 1 ou 2, caractérisé en ce que le tracé des arêtes de coupe (5, 6; 5', 6') est incliné de façon rectiligne selon un angle de 3° à 10° par rapport à la surface d'appui.

4. Outil de coupe pour alésage dans la masse et tournage selon l'une des revendications 1 à 3, caractérisé en ce que la plaquette réversible (3) comporte un orifice central (9) et est fixée au corps de base de l'outil par cet orifice central (9) au moyen d'une vis à tête fraisée (10).

5. Outil de coupe pour alésage dans la masse et tournage selon l'une des revendications 1 à 4, caractérisé en ce que l'outil (1) comporte dans la tige (1) d'outil un alésage de tracé longitudinal qui débouche immédiatement à la plaquette réversible (3) pour y amener un agent refroidissant.
